# EUROPEAN PATENT SPECIFICATION

(11) **EP 3 499 093 B1**
(45) Date of publication and mention of the grant of the patent: **07.07.2021**
(21) Application number: 17838334.5
(22) Date of filing: 16.03.2017
(51) Int. Cl.: F16H 59/02, F16H 63/42, B60K 20/02, F16H 59/04, F16H 61/24

(54) **GEARSHIFT CONTROL MECHANISM, AUTOMOBILE, AND GEAR CONTROL METHOD**
GANGSCHALTMECHANISMUS, AUTOMOBIL UND GETRIEBESTEUERUNGSVERFAHREN
MÉCANISME DE COMMANDE DE CHANGEMENT DE VITESSE, VOITURE AUTOMOBILE ET PROCÉDÉ DE COMMANDE DE CHANGEMENT DE VITESSE

(30) Priority: 08.08.2016 CN 201610644823
(43) Date of publication of application: 19.06.2019
(73) Proprietor: Beiqi Foton Motor Co., Ltd., Beijing 102206 (CN)
(72) Inventor: CHU, Chao, Beijing 102206 (CN); LIU, Jinbao, Beijing 102206 (CN); YUE, Yanliang, Beijing 102206 (CN); YOU, Tingqin, Beijing 102206 (CN)
(74) Representative: advotec.
(86) International application number: PCT/CN2017/076982
(87) International publication number: WO 2018/028201

(56) References cited:
- CN-A- 106 286 796
- CN-U- 204 437 248
- DE-A1-102011 119 862
- DE-U1-202007 000 210
- JP-A- 2007 062 664
- JP-B2- 4 806 647
- KR-B1- 101 381 435
- US-A1- 2008 042 644
- US-A1- 2012 318 090

## Description

### FIELD

The present invention relates to the field of vehicles, and more particularly to a gearshift control mechanism, a vehicle and a gear control method.

### BACKGROUND

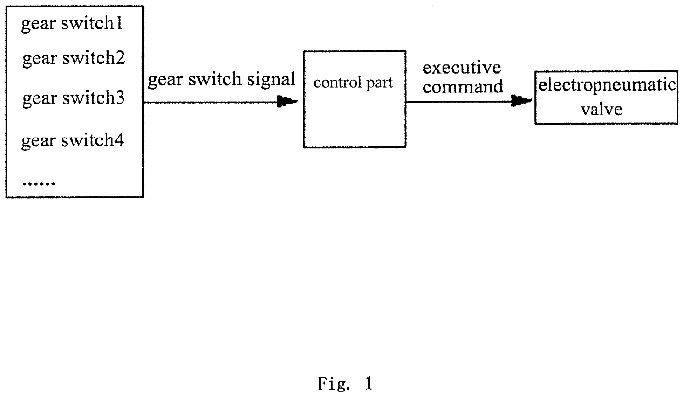

As shown in Fig. 1, there are pneumatic control gearbox and a control system thereof. The control principle of the pneumatic control gearbox is that a series of switches are mounted at a gearshift control handle in the body of the vehicle, a different switch is touched each time a different gear is shifted to, the switch transmits a signal to a controller, the controller processes information and controls a corresponding electropneumatic valve, and the gear is controlled by means of a pneumatic circuit at last. The above structure has the following defects: 1. the pneumatic control gearbox and the control system employ many switches, resulting a complex structure; and 2. the switches are used frequently, which means large mechanical abrasion to the switches, resulting in a short service life thereof, and so on.

US 2008/042644 A1 provides an electronic shift lever assembly which can select a gear position by sensing the movement of a shift lever in forward, backward, right and left directions. The electronic shift lever assembly includes: a shift lever movable to select a gear position; a first sensor unit comprising a plurality of linear hall sensors for sensing vertical movement of the shift lever; and a second sensor unit comprising a plurality of switch hall sensors for sensing horizontal movement of the shift lever.

### SUMMARY

The main objective of the present invention is to provide a gearshift control mechanism, a vehicle and a gear control method, thereby solving a problem that a gearshift control mechanism in the prior art has a short service life.

The present invention is defined in independent claim 1, representing a gearshift control mechanism, and independent claim 11, representing a gear control method, wherein preferred embodiments according to the present invention are defined in the dependent claims. Any embodiment in the present application that does not fall within the scope of the present invention should be regarded as an example for understanding the present invention.

With the technical solution of the present invention, the gearshift control mechanism suffers no mechanical abrasion during signal transmission as the sensor is used for transmitting signals. The service life of the gearshift control mechanism can be guaranteed. The structure using the technical scheme of the present invention is simplified, easy to mount and manufacture.

### BRIEF DESCRIPTION OF THE DRAWINGS

The drawings construct part of the present invention and provide further comprehension for the present invention. The explanatory embodiments of the present invention are used to illustrate the present invention but shall not be construed to limit the present invention improperly, in which:
Fig. 1 illustrates a view showing a control principle of a gearshift control mechanism in the related art;
Fig. 2 illustrates a perspective view of an embodiment of the gearshift control mechanism in accordance with the present invention;
Fig. 3 illustrates a perspective view of the gearshift control mechanism in Fig. 2 from another angle;
Fig. 4 illustrates a top view of a base plate of the gearshift control mechanism in Fig. 2;
Fig. 5 illustrates a schematic view of a handle of the gearshift control mechanism in Fig. 2;
Fig. 6 illustrates a graph showing the relationship between measured voltage of a first sensor and position when the handle of the gearshift control mechanism in Fig. 2 is located at different gear positions;
Fig. 7 illustrates a graph showing the relationship between measured voltage of a second sensor and position when the handle of the gearshift control mechanism in Fig. 2 is located at different gear positions;
Fig. 8 illustrates a graph showing information of gear positions of the gearshift control mechanism in Fig. 2; and
Fig. 9 illustrates a view showing a control principle of the gearshift control mechanism in Fig. 2.

The following reference numerals are included in the above drawings.

10 base plate; 11 first sliding channel; 12 second sliding channel; 20 handle; 21 handle lever; 22 ball part; 23 elastic member; 24 mounting part; 30 first shaft; 40 first supporting part; 50 first polar plate part; 51 first upper polar plate; 52 first lower polar plate; 53 first polar-plate connecting plate; 60 first sensor; 70 second shaft; 80 second polar plate part; 81 polar plate body; 811 second upper polar plate; 812 second lower polar plate; 813 second polar-plate connecting plate; 82 connecting part; 821 first connecting plate; 822 second connecting plate; 90 second sensor; 100 second supporting part; 200 pivot.

### DETAILED DESCRIPTION

It should be noted that, embodiments and features of the embodiments of the present application can be combined mutually without conflict, subject to the appended claims representing the present invention.

The present invention will be described in detail with reference to the drawings and the embodiments in the following.

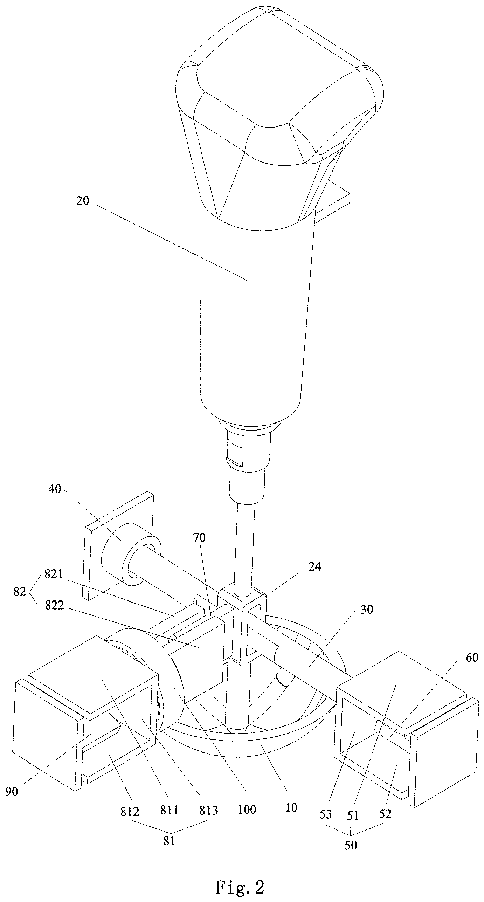

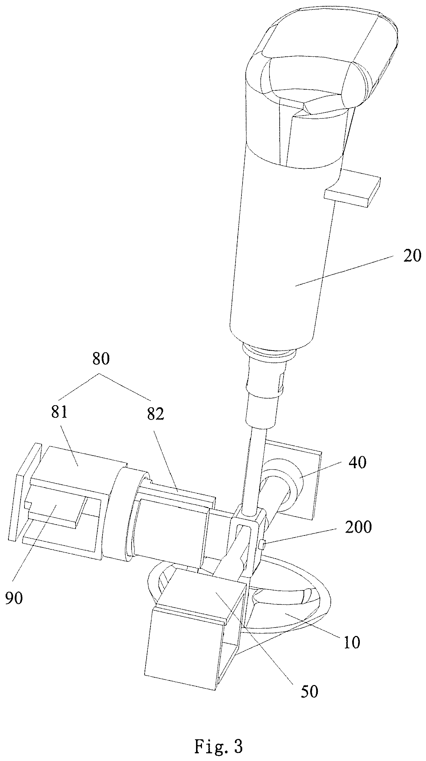

As shown in Fig. 2 and Fig. 3, a gearshift control mechanism of a present embodiment includes a base plate 10, a handle 20, a first transmission part, a first polar plate part 50 and a first sensor 60. The base plate 10 is arranged fixedly and has a sliding channel with a plurality of different gear positions. The handle 20 has an operation end and a sliding end, and the sliding end is slidably arranged in the sliding channel. The handle 20 further has a mounting part 24, and the first transmission part is connected to the mounting part 24. The first polar plate part 50 is connected to the first transmission part, and the first polar plate part 50 generates a first magnetic field therein. The first sensor 60 is arranged fixedly, and extends into the first polar plate part 50 and outputs a first signal. When the sliding end slides along the sliding channel, the mounting part 24 drives the first transmission part to rotate, and the first polar plate part 50 rotates along with the first transmission part.

With the technical solution of the present embodiment, the gearshift control mechanism includes the fixedly arranged first sensor 60, and the first polar plate part 50 generates the first magnetic field therein. The first sensor 60 extends into the first polar plate part 50 and outputs the first signal. When the handle 20 slides along the sliding channel under control, the first polar plate part 50 rotates. The strength of the magnetic field at the first sensor 60 changes under the action of rotation of the first polar plate part 50, and the first signal output from the first sensor 60 changes therewith. The above structure can determine which gear position on the base plate 10 the handle is located at by means of the received first signal. The gearshift control mechanism suffers no mechanical abrasion during signal transmission as the sensor is used for transmitting signals. On the one hand, the reliability during operation and the service life of the gearshift control mechanism can be guaranteed; on the other hand, gear shift can be more flexible and smoother. Moreover, the structure using the technical solution of the present embodiment is simplified, easy to mount and manufacture.

As shown in Fig. 2, Fig. 3 and Fig. 4, the sliding channel includes a first sliding channel 11 and a second sliding channel 12 arranged in a cross manner, achieving a plurality of different gear positions. The gearshift control mechanism further includes a second transmission part connected to the mounting part 24; a second polar plate part 80 connected to the second transmission part, the second polar plate part 80 generating a second magnetic field therein; a fixedly arranged second sensor 90, extending into the second polar plate part 80 and outputting a second signal. When the sliding end slides along the first sliding channel 11, the mounting part 24 drives the first transmission part to rotate, the first transmission part drives the first polar plate part 50 to rotate, and the second polar plate part 80 remains at its position. When the sliding end slides along the second sliding channel 12, the second transmission part drives the second polar plate part 80 to rotate, and the first polar plate part 50 remains at its position. Specifically, the gearshift control mechanism includes the first sensor 60 and the second sensor 90 which are fixed arranged, the first polar plate part 50 generates the first magnetic field therein, and the second polar plate part 80 generates the second magnetic field therein. The first sensor 60 extends into the first polar plate part 50 and outputs the first signal, and the second sensor 90 extends into the second polar plate part 80 and outputs the second signal. When the handle 20 slides along the first sliding channel 11 under control, the first polar plate part 50 rotates. Rotation of the first polar plate part 50 makes the strength of a magnetic field at the first sensor 60 change, and the first signal output from the first sensor 60 changes therewith. At this time, the second polar plate part 80 remains at its position, and the second signal output from the second polar plate part 80 remains unchanged. When the handle 20 slides along the second sliding channel 12 under control, the second polar plate part 80 rotates. Rotation of the second polar plate part 80 makes the strength of the magnetic field at the second sensor 90 change, the second signal output from the second sensor 90 changes therewith. At this time, the first polar plate part 50 remains at its position, and the second signal output from the first polar plate part 50 remains unchanged. It is can be determined which gear position on the base plate 10 the handle is located at by means of the received first signal and second signal.

With the technical solution of the present embodiment, the gearshift control mechanism suffers no mechanical abrasion during signal transmission as the sensor is used for transmitting signals. On the one hand, the reliability during operation and the service life of the gearshift control mechanism can be guaranteed; on the other hand, gear shift can be more flexible and smoother. Moreover, the structure using the technical solution of the present embodiment is simplified, easy to mount and manufacture.

As shown in Fig. 2 and Fig. 3, in the present embodiment, the first transmission part includes a first shaft 30 which is pivotally connected to the mounting part 24 by means of a pivot 200. The first shaft 30 has a first end and a second end, the second end of the first shaft 30 is connected to the first polar plate part 50. The above structure is simple and easy to realize.

In the present embodiment, the mounting part 24 is a rectangular mounting frame, and the first shaft 30 penetrates the rectangular mounting frame. In order to enhance cooperation between the mounting part 24 and the first shaft 30, the first shaft 30 has a flat part cooperating with the rectangular mounting frame. Therefore, the mounting part 24 can drive the first shaft 30 to rotate in a better way. Of course, the mounting part 24 is not limited by the above structure, and the cooperation between the mounting part 24 and the first shaft 30 is not limited by the above manner, too.

As shown in Fig. 2 and Fig. 3, in the present embodiment, the gearshift control mechanism further includes a first supporting part 40 which is fixedly arranged, the first end of the first shaft 30 is rotatably arranged to the first supporting part 40.

As shown in Fig. 2 and Fig. 3, in the present embodiment, the second transmission part includes a second shaft 70 which is fixedly connected to the mounting part 24, and the second shaft 70 drives the second polar plate part 80 to rotate. The above structure is simple and easy to realize.

As shown in Fig. 2 and Fig. 3, in the present embodiment, the first polar plate part 50 includes a first upper polar plate 51 and a first lower polar plate 52 which are arranged opposite to each other, as well as a first polar-plate connecting plate 53 which connects the first upper polar plate 51 with the first lower polar plate 52. The first shaft 30 is arranged to the first polar-plate connecting plate 53. Specifically, the polarity of the first upper polar plate 51 is opposite to that of the first lower polar plate 52, which generates the first magnetic field. The first sensor 60 is located between the first upper polar plate 51 and the first lower polar plate 52. When the handle 20 slides along the first sliding channel under control, the first upper polar plate 51 and the first lower polar plate 52 rotate, thereby making the strength of magnetic field at the first sensor 60 change, such that the first signal output from the first sensor 60 changes therewith. The above structure is simple and easy to realize.

As shown in Fig. 2 and Fig. 3, in the present embodiment, the second polar plate part 80 includes a polar plate body 81 and a connecting part 82 arranged to the polar plate body 81. The second shaft 70 drives the polar plate body 81 to rotate along an axis of the pivot 200 by means of the connecting part 82. Specifically, the polar plate body 81 generates the second magnetic field therein, and the connecting part 82 can transmit rotation. When the handle 20 slides along the second sliding channel under control, the second shaft 70 rotates about the axis of the pivot 200. The second shaft 70 cooperates with the connecting part 82 to make the second shaft 70 rotate, and the second polar plate part 80 rotates therewith at the same time. The above structure is simple and can realize position shift of the second polar plate part 80, and the above position shift makes the strength of the magnetic field at the second sensor 90 change, such that the second signal output from the second sensor 90 changes.

As shown in Fig. 2 and Fig. 3, in the present embodiment, the polar plate body 81 includes a second upper polar plate 811 and a second lower polar plate 812 which are arranged opposite to each other, as well as a second polar-plate connecting plate 813 which connects the second upper polar plate 811 with the second lower polar plate 812. The connecting part 82 is arranged to the second polar-plate connecting plate 813. Specifically, the polarity of the second upper polar plate 811 is opposite to that of the second lower polar plate 812, which generates the second magnetic field, the second sensor 90 is located between the second upper polar plate 811 and the second lower polar plate 812. When the handle 20 slides along the second sliding channel under control, the second upper polar plate 811 and the second lower polar plate 812 rotate, thereby making the strength of magnetic field at the second sensor 90 change, such that the second signal output from the second sensor 90 changes therewith. The above structure is simple and easy to realize.

As shown in Fig. 2 and Fig. 3, in the present embodiment, the connecting part 82 includes a first connecting plate 821 and a second connecting plate 822 which are arranged opposite to each other. The second shaft 70 is a flat shaft arranged between the first connecting plate 821 and the second connecting plate 822. Optionally, the first connecting plate 821 and the second connecting plate 822 are rectangular plates, and the above flat shaft has two cooperative planes which cooperate with the first connecting plate 821 and the second connecting plate 822. When the handle 20 slides along the first sliding channel under control, the second shaft 70 rotates around the axis of the first shaft 30 along with the mounting part 24. The connecting part 82 moves within the space between the first connecting plate 821 and the second connecting plate 822. When the handle 20 slides along the second sliding channel under control, the second shaft 70 rotates about the axis of the pivot 200. The cooperative planes of the second shaft 70 are in contact and fit with inner surfaces of the first connecting plate 821 and the second connecting plate 822, such that the connecting part 82 rotates along with the second shaft 70. The above structure is simple, facilitates assembling and lowers the cost.

As shown in Fig. 2 and Fig. 3, in the present embodiment, the gearshift control mechanism further includes a second supporting part 100, the second supporting part 100 is fixedly arranged, and the connecting part 82 is pivotally arranged in the second supporting part 100. The above structure ensures that the connecting part 82 rotates along with the second shaft 70 on the premise of providing the second polar plate part 80 with a supporting force.

As shown in Fig. 2 and Fig. 3, in the present embodiment, the second supporting part 100 includes a supporting ring, and the connecting part 82 is provided with an arc cooperating part for cooperating with the supporting ring. The above structure is simple, and easy to process and assemble.

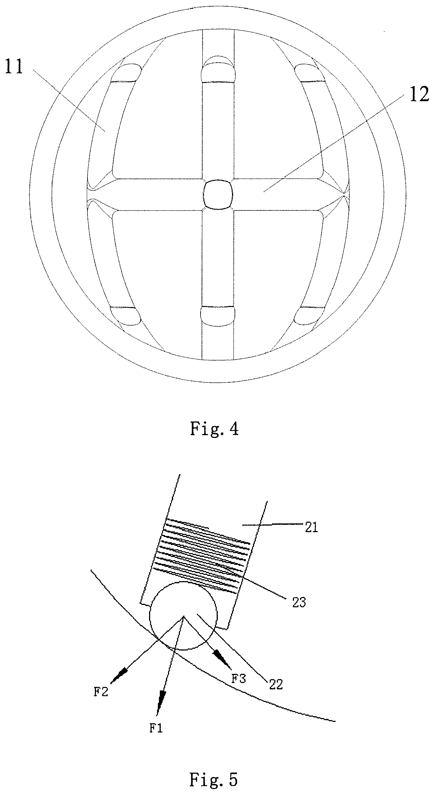

As shown in Fig. 2 and Fig. 5, in the present embodiment, the handle 20 includes a handle lever 21 and a ball part 22 connected to the handle lever 21. The ball part 22 is slidably arranged in the sliding channel. Sliding friction between a sliding end of the handle 20 and the sliding channel is converted into rolling friction by means of the above structure, which reduces the force of friction. On the one hand, the handle 20 is more flexible, which improves the user experience; on the other hand, noise caused by friction is lowered.

As shown in Fig. 5, in the present embodiment, the base plate 10 has an inner surface which is partially spherical, the handle 20 further includes an elastic member 23, and the elastic member 23 is arranged in the handle lever 21 and abuts against the ball part 22. With the above structure, the user can downshift or shift gear with less effort. Specifically, because of abutting fit between the elastic member 23 and the ball part 22, the elastic member 23 applies a downward force on the ball part 22. As shown in Fig. 5, when the ball part 22 is located at positions except the lowest position of the spherical base plate 10, the elastic member 23 applies a force F1 on the ball part 22, a direction of the force is indicated by an arrow F1 shown in Fig. 5. F1 may be decomposed into F2 in a radial direction of the sphere and F3 in a tangent direction of the sphere. The ball part 22 at an upper position will slide towards a neutral at a lower position due to the force F3, such that the user can downshift or shift gear with less effort, thereby improving the user experience.

As shown in Fig. 5, in the present embodiment, the elastic member 23 is a spring. The above structure is simple and easy to assemble, and lowers the manufacturing cost.

As shown in Fig. 2, in the present embodiment, the sliding channel is provided with a limiting part therein corresponding to each gear position. Preferably, the limiting part is a round groove fitting with the ball part 22. With the above structure, the ball part 22 can stay at a predetermined gear position when sliding to the predetermined gear position.

As shown in Fig. 4, in the present embodiment, the first sliding channel 11 is perpendicular to the second sliding channel 12. A plurality of parallel first sliding channels 11 are provided, and the second sliding channel 12 is connected to a middle portion of each first sliding channel 11.

In the present embodiment, both the first sensor 60 and the second sensor 90 are Hall sensors. The above structure is simple and easy to realize. In the present embodiment, the first signal output from the first sensor 60 is a first voltage signal, and the second signal output from the second sensor 90 is a second voltage signal.

The present application further provides a vehicle (not shown in the drawings), the vehicle includes a body, a control part and a gearshift control mechanism. The control part is arranged on the body. The gearshift control mechanism is arranged on the body. The control part is electrically coupled to a first sensor 60 of the gearshift control mechanism. The gearshift control mechanism is the above gearshift control mechanism. Because the gearshift control mechanism is good in reliability and long in service life, the vehicle with the gearshift control mechanism also has the above advantages.

In the present embodiment, the gearshift control mechanism further includes a second sensor 90, the second sensor 90 outputs the second signal, and the control part is electrically coupled to the second sensor 90. With the above structure, the gearshift control mechanism can adapt to different gear positions, such that universality of the gearshift control mechanism is better. In addition, the vehicle employing the above gearshift control mechanism is good in reliability and long in service life.

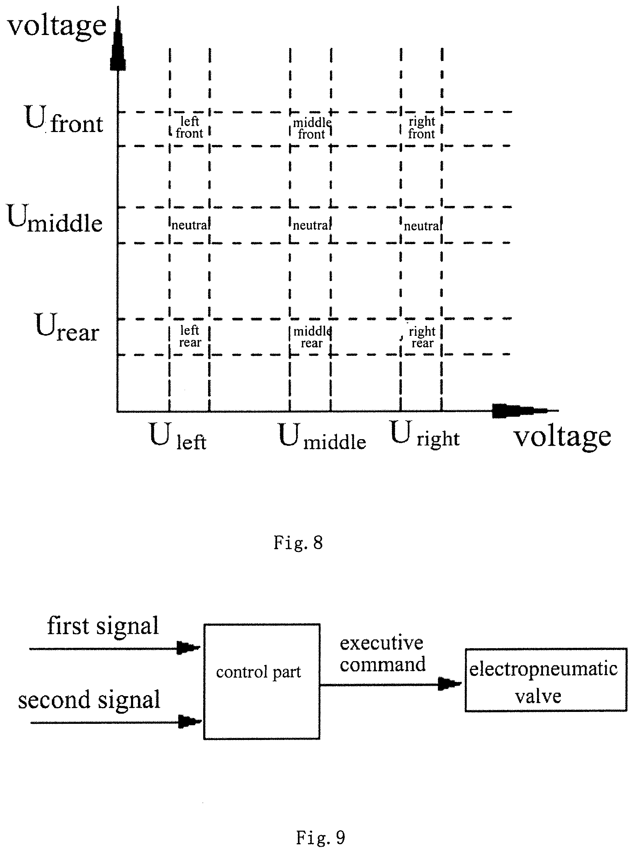

As shown in Fig. 9, the present application further provides a gear control method. The gear control method employs the gearshift control mechanism includes: acquiring the first signal of the gearshift control mechanism in real time; generating gear indication information corresponding to the first signal; reading gear position information corresponding to the gear indication information in a pre-stored gear position list; and shifting based on the gear position information (in which a control part determines a gear position based on the gear position information, and then outputs voltages to solenoid valves for different gear positions, driving the different gear position). With the technical solution of the present embodiment, the sensors are used to transmit signals, such that the gearshift control mechanism suffers no mechanical abrasion during signal transmission, thereby ensuring reliability of the gear position information.

It should be note that, a step of acquiring the first signal when the sliding end of the handle of the gearshift control mechanism is located at each gear position to form the gear position list is included before the step of reading gear position information corresponding to the gear indication information in a pre-stored gear position list.

In the present embodiment, the gearshift control mechanism further includes the second sensor 90, the second sensor 90 outputs the second signal, employing the above gearshift control mechanism, the gear control method includes acquiring the first signal and the second signal of the gearshift control mechanism in real time; generating gear indication information corresponding to the first signal and the second signal; reading gear position information corresponding to the gear indication information in a pre-stored gear position list; and shifting based on the gear position information (in which a control part determines a gear position based on the gear position information, and then outputs voltages to solenoid valves for different gear positions, driving the different gearposition). With the technical solution of the present embodiment, the sensors are used to transmit signals, such that the gearshift control mechanism suffers no mechanical abrasion during signal transmission, thereby ensuring reliability of the gear position information.

It should be note that, a step of acquiring the first signal and the second signal when the sliding end of the handle of the gearshift control mechanism is located at each gear position to form the gear position list is included before the step of reading gear position information corresponding to the gear indication information in a pre-stored gear position list.

A vehicle with five gear position is taken as an example for introducing how the gear position list forms.

As the base plate shown in Fig. 4, four channels are defined in the base plate, including three parallel first sliding channels and a second sliding channel arranged at middle portions of the three first sliding channels. The four channels include five different gears. The above five different gears include a first gear located at the left front, a second gear located at the left rear, a third gear located at middle front, a fourth gear located at middle rear, and a fifth gear located at the right front. The four channels include a neutral and a reverse besides the five different gears. The neutral is located at middle cross points (totally three) between the first sliding channels and the second sliding channel. The reverse position is located at the right rear of the base plate.

In the present embodiment, when the handle 20 slides in the first sliding channel, only a voltage across two ends of the first sensor 60 changes. When the handle 20 slides in the second sliding channel, only a voltage across two ends of the second sensor 90 changes.

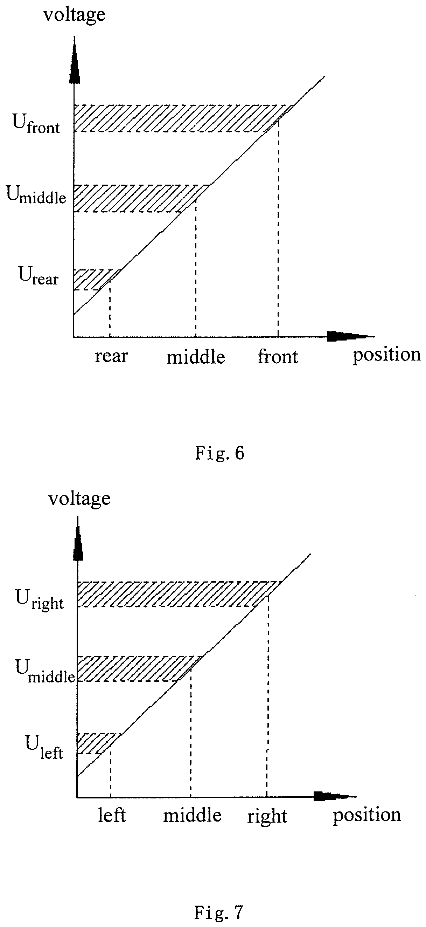

If the handle 20 slides in the first sliding channel, when the handle 20 is located in the front of the first sliding channel, a voltage U_{front} across two ends of the first sensor 60 is recorded, when the handle 20 is located in the middle of the first sliding channel, a voltage U_{middle} across two ends of the first sensor 60 is recorded, and when the handle 20 is located in the rear of the first sliding channel, a voltage Uᵣₑₐᵣ across two ends of the first sensor 60 is recorded. A graph shown in Fig. 6 is made based on the above data, in which an axis X represents the position where the handle 20 is located in the first sliding channel, and an axis Y represents a voltage across two ends of the first sensor 60.

If the handle 20 slides in the second sliding channel, when the handle 20 is located in the left of the second sliding channel, a voltage U_{left} across two ends of the second sensor 90 is recorded, when the handle 20 is located in the middle of the second sliding channel, a voltage U_{middle} across two ends of the second sensor 90 is recorded, and when the handle 20 is located in the right of the second sliding channel, a voltage U_{right} across two ends of the second sensor 90 is recorded. A graph shown in Fig. 7 (in which both the Fig. 6 and the Fig. 7 are schematic graphs, and a specific graph is obtained by calculating through an actual function related to many factors such as the strength of a magnetic field, a current of a sensor, etc., which will not be discussed in-depth herein) is made based on the above data, in which an axis X represents the position where the handle 20 is located in the first sliding channel, and an axis Y represents a voltage across two ends of the second sensor 90.

The graph shown in Fig. 8 can be obtained based on Fig. 6 and Fig. 7. In Fig. 8, an axis X represents the position where the handle 20 is located in the second sliding channel, and an axis Y represents the position where the handle 20 is located in the first sliding channel. When an actually detected voltage of the first sensor 60 is the above U_{front}, and an actually detected voltage of the second sensor 90 is U_{left}, it is determined that the handle 20 is located at the left front position at this time, that is the handle 20 is in the first gear. Similarly, when an actually detected voltage of the first sensor 60 is the above Uᵣₑₐᵣ, and an actually detected voltage of the second sensor 90 is U_{left}, it is determined that the handle 20 is located at the left rear position at this time, that is the handle 20 is in the second gear. Similarly, other gear determination is in the same way as the above, which is not described herein. When an actually detected voltage of the first sensor 60 is U_{middle}, it is determined that the handle 20 is at the neutral at this time.

## Claims

1. A gearshift control mechanism, comprising:
a fixedly arranged base plate (10) having a sliding channel with a plurality of different gear positions;
a handle (20) having an operation end and a sliding end, the sliding end being slidably arranged in the sliding channel, and the handle (20) further having a mounting part (24);
a first transmission part connected to the mounting part (24);
a first polar plate part (50) connected to the first transmission part and generating a first magnetic field therein; and
a fixedly arranged first sensor (60) extending into the first polar plate part (50) and outputting a first signal;
**characterized in that** the first transmission part comprises a first shaft (30) pivotally connected to the mounting part (24) by means of a pivot (200) and having a first end and a second end, the second end of the first shaft (30) being connected to the first polar plate part (50);
when the sliding end slides along the sliding channel, the mounting part (24) is configured such that it drives the first shaft (30) to rotate around an axis of the first shaft (30), and the first polar plate part (50) rotates along with the first transmission part;
the gearshift control mechanism further comprises a fixedly arranged first supporting part (40), and the first end of the first shaft (30) is rotatably arranged to the first supporting part (40).

2. The gearshift control mechanism according to claim 1, wherein the sliding channel comprises a first sliding channel (11) and a second sliding channel (12) arranged in a cross manner, achieving a plurality of different gear positions, the gearshift control mechanism further comprises:
a second transmission part connected to the mounting part (24);
a second polar plate part (80) connected to the second transmission part and
generating a second magnetic field therein; and
a fixedly arranged second sensor (90) extending into the second polar plate part (80) and outputting a second signal;
wherein when the sliding end slides along the first sliding channel (11), the mounting part (24) is configured such that it drives the first shaft (30) to rotate around the axis of the first shaft (30), the first shaft (30) drives the first polar plate part (50) to rotate, and the second polar plate part (80) remains at its position, when the sliding end slides along the second sliding channel (12), the second transmission part is configured such that it drives the second polar plate part (80) to rotate about an axis of the pivot (200), and the first polar plate part (50) remains at its position.

3. The gearshift control mechanism according to claim 2, wherein the second transmission part comprises a second shaft (70) fixedly connected to the mounting part (24), and the second shaft (70) drives the second polar plate part (80) to rotate about the axis of the pivot (200).

4. The gearshift control mechanism according to claim 1, wherein the first polar plate part (50) comprises a first upper polar plate (51) and a first lower polar plate (52) arranged opposite to each other, as well as a first polar-plate connecting plate (53) connecting the first upper polar plate (51) with the first lower polar plate (52), and the first shaft (30) is arranged to the first polar-plate connecting plate (53).

5. The gearshift control mechanism according to claim 3, wherein the second polar plate part (80) comprises a polar plate body (81) and a connecting part (82) arranged to the polar plate body (81), and the second shaft (70) drives the polar plate body (81) to rotate about the axis of the pivot (200) by means of the connecting part (82).

6. The gearshift control mechanism according to claim 5, wherein the polar plate body (81) comprises a second upper polar plate (811) and a second lower polar plate (812) arranged opposite to each other, as well as a second polar-plate connecting plate (813) connecting the second upper polar plate (811) with the second lower polar plate (812), and the connecting part (82) is arranged to the second polar-plate connecting plate (813).

7. The gearshift control mechanism according to claim 5, wherein the connecting part (82) comprises a first connecting plate (821) and a second connecting plate (822) arranged opposite to each other, the second shaft (70) is a flat shaft arranged between the first connecting plate (821) and the second connecting plate (822), and the flat shaft has two cooperative planes cooperating with the first connecting plate (821) and the second connecting plate (822).

8. The gearshift control mechanism according to claim 5, wherein the gearshift control mechanism further comprises a second supporting part (100), the second supporting part (100) is fixedly arranged, and the connecting part (82) is pivotally arranged in the second supporting part (100);
preferably, the second supporting part (100) comprises a supporting ring, and the connecting part (82) is provided with an arc cooperating part for cooperating with the supporting ring.

9. The gearshift control mechanism according to claim 2, wherein the handle (20) comprises a handle lever (21) and a ball part (22) connected to the handle lever (21), and the ball part (22) is slidably arranged in the sliding channel;
preferably, the handle (20) further comprises an elastic member (23), and the elastic member (23) is arranged in the handle lever (21) and abuts against the ball part (22).

10. A vehicle, comprising:
a body;
a control part arranged on the body; and
a gearshift control mechanism arranged on the body, the control part being electrically coupled to a first sensor (60) of the gearshift control mechanism, wherein the gearshift control mechanism is the gearshift control mechanism according to any one of claims 1 to 9.

11. A gear control method employing the gearshift control mechanism according to any one of claims 1 to 9 and a control part, and comprising:
acquiring the first signal of the gearshift control mechanism in real time;
generating gear indication information corresponding to the first signal;
reading gear position information corresponding to the gear indication information in a pre-stored gear position list; and
shifting to different positions of the sliding channel of the gearshift control mechanism based on the gear position information, wherein the control part determines a gear position based on the gear position information, and then outputs voltages to solenoid valves for different gear positions, driving the different gear position.

12. The method according to claim 11, wherein the gearshift control mechanism is the gearshift control mechanism according to claim 2 or 3 or 5 or 6 or 7 or 8 or 9, and the method further comprises:
acquiring the second signal of the gearshift control mechanism in real time;
generating gear indication information corresponding to the first signal and the second signal;
reading gear position information corresponding to the gear indication information in a pre-stored gear position list; and
shifting to different positions of the sliding channel of the gearshift control mechanism based on the gear position information, wherein the control part determines a gear position based on the gear position information, and then outputs voltages to solenoid valves for different gear positions, driving the different gear position.

13. The method according to claim 11, further comprising a step of acquiring the first signal when the sliding end of the handle (20) of the gearshift control mechanism is located at each gear position to form the gear position list before the step of reading gear position information corresponding to the gear indication information in a pre-stored gear position list.

14. The method according to claim 12, further comprising a step of acquiring the first signal and the second signal when the sliding end of the handle (20) of the gearshift control mechanism is located at each gear position to form the gear position list before the step of reading gear position information corresponding to the gear indication information in a pre-stored gear position list.

## Patentansprüche

1. Gangschaltmechanismus, umfassend:
eine fest angeordnete Basisplatte (10) mit einer Gleitbahn mit einer Vielzahl von verschiedenen Gangpositionen;
einen Griff (20) mit einem Bedienende und einem Gleitende, wobei das Gleitende gleitend in der Gleitbahn angeordnet ist und wobei der Griff (20) des Weiteren einen Lagerteil (24) aufweist;
einen mit dem Lagerteil (24) verbundenen ersten Übertragungsteil;
einen mit dem ersten Übertragungsteil verbundenen und darin ein erstes Magnetfeld erzeugenden ersten Polplattenteil (50); und
einen sich in den ersten Polplattenteil (50) erstreckenden und ein erstes Signal ausgebenden, fest angeordneten ersten Sensor (60);
**dadurch gekennzeichnet, dass** der erste Übertragungsteil eine erste Welle (30) umfasst, die mittels eines Gelenks (200) drehbar mit dem Lagerteil (24) verbunden ist und ein erstes Ende und ein zweites Ende aufweist, wobei das zweite Ende der ersten Welle (30) mit dem ersten Polplattenteil (50) verbunden ist;
dass wenn das Gleitende an der Gleitbahn entlanggleitet, der Lagerteil (24) derart ausgebildet ist, dass er die erste Welle (30) um eine Achse der ersten Welle (30) dreht und der erste Polplattenteil (50) sich zusammen mit dem ersten Übertragungsteil dreht;
dass der Gangschaltmechanismus des Weiteren einen fest angeordneten ersten Stützteil (40) aufweist und das erste Ende der ersten Welle (30) drehbar an dem ersten Stützteil (40) angebracht ist.

2. Gangschaltmechanismus nach Anspruch 1, wobei die Gleitbahn eine erste Gleitbahn (11) und eine zweite Gleitbahn (12) aufweist, die kreuzweise angeordnet sind, wodurch eine Vielzahl von verschiedenen Schaltpositionen eingenommen werden können, wobei der Gangschaltmechanismus des Weiteren Folgendes umfasst:
einen mit dem Lagerteil (24) verbundenen zweiten Übertragungsteil;
einen mit dem zweiten Übertragungsteil verbundenen und darin ein zweites Magnetfeld erzeugenden zweiten Polplattenteil (80); und
einen sich in den zweiten Polplattenteil (80) erstreckenden und ein zweites Signal ausgebenden, fest angeordneten zweiten Sensor (90);
wobei wenn das Gleitende an der ersten Gleitbahn (11) entlanggleitet, der Lagerteil (24) derart ausgebildet ist, dass er die erste Welle (30) um die Achse der ersten Welle (30) dreht, die erste Welle (30) den ersten Polplattenteil (50) dreht und der zweite Polplattenteil (80) in seiner Position verbleibt, wobei wenn das Gleitende an der zweiten Gleitbahn (12) entlanggleitet, der zweite Übertragungsteil derart ausgebildet ist, dass er den zweiten Polplattenteil (80) um eine Achse des Gelenks (200) dreht und der erste Polplattenteil (50) in seiner Position verbleibt.

3. Gangschaltmechanismus nach Anspruch 2, wobei der zweite Übertragungsteil eine fest mit dem Lagerteil (24) verbundene zweite Welle (70) umfasst und die zweite Welle (70) den zweiten Polplattenteil (80) um die Achse des Gelenks (200) dreht.

4. Gangschaltmechanismus nach Anspruch 1, wobei der erste Polplattenteil (50) eine erste obere Polplatte (51) und eine erste untere Polplatte (52), welche einander gegenüberliegend angeordnet sind, und eine die erste obere Polplatte (51) mit der ersten unteren Polplatte (52) verbindende erste Polplatten-Verbindungsplatte (53) umfasst und wobei die erste Welle (30) an der Polplatten-Verbindungsplatte (53) angeordnet ist.

5. Gangschaltmechanismus nach Anspruch 3, wobei der zweite Polplattenteil (80) einen Polplattenkörper (81) und einen an dem Polplattenkörper (81) angeordneten Verbindungsteil (82) aufweist und wobei die zweite Welle (70) mittels des Verbindungsteils (82) den Polplattenkörper (81) um die Achse des Gelenks (200) dreht.

6. Gangschaltmechanismus nach Anspruch 5, wobei der Polplattenkörper (81) eine zweite obere Polplatte (811) und eine zweite untere Polplatte (812), welche einander gegenüberliegend angeordnet sind, und eine die zweite obere Polplatte (811) mit der zweiten unteren Polplatte (812) verbindende zweite Polplatten-Verbindungsplatte (813) umfasst und wobei der Verbindungsteil (82) an der zweiten Polplatten-Verbindungsplatte (813) angeordnet ist.

7. Gangschaltmechanismus nach Anspruch 5, wobei der Verbindungsteil (82) eine erste Verbindungsplatte (821) und eine zweite Verbindungsplatte (822) umfasst, welche einander gegenüberliegend angeordnet sind, wobei die zweite Welle (70) eine zwischen der ersten Verbindungsplatte (821) und der zweiten Verbindungsplatte (822) angeordnete Flachwelle ist und wobei die Flachwelle zwei interagierende Ebenen aufweist, welche mit der ersten Verbindungsplatte (821) und der zweiten Verbindungsplatte (822) interagieren.

8. Gangschaltmechanismus nach Anspruch 5, wobei der Gangschaltmechanismus des Weiteren einen zweiten Stützteil (100) umfasst, wobei der zweite Stützteil (100) fest angeordnet ist und wobei der Verbindungsteil (82) schwenkbar in dem zweiten Stützteil (100) angeordnet ist;
wobei der zweite Stützteil (100) bevorzugt einen Stützring umfasst und wobei der Verbindungsteil (82) mit einem Bogeninteraktionsteil zum Interagieren mit dem Stützring versehen ist.

9. Gangschaltmechanismus nach Anspruch 2, wobei der Griff (20) einen Griffhebel (21) und einen mit dem Griffhebel (21) verbundenen Kugelteil (22) umfasst und wobei der Kugelteil (22) gleitend in der Gleitbahn angeordnet ist;
wobei der Griff (20) bevorzugt des Weiteren ein elastisches Glied (23) umfasst und wobei das elastische Glied (23) in dem Griffhebel (21) angeordnet ist und an dem Kugelteil (22) anliegt.

10. Fahrzeug, umfassend:
einen Körper;
einen an dem Körper angeordneten Schaltteil; und
einen an dem Körper angeordneten Gangschaltmechanismus, wobei der Schaltteil mit einem ersten Sensor (60) des Gangschaltmechanismus elektrisch gekoppelt ist, wobei der Gangschaltmechanismus der Gangschaltmechanismus nach einem der Ansprüche 1 bis 9 ist.

11. Gangschaltverfahren mit dem Gangschaltmechanismus nach einem der Ansprüche 1 bis 8 und einem Schaltteil, umfassend:
Erhalten des ersten Signals des Gangschaltmechanismus in Echtzeit;
Erzeugen von dem ersten Signal entsprechenden Ganganzeigeinformationen;
Lesen von den Ganganzeigeinformationen entsprechenden Gangpositionsinformationen in einer vorgespeicherten Gangpositionsliste; und
Schalten in verschiedene Positionen der Gleitbahn des Gangschaltmechanismus anhand der Gangpositionsinformationen, wobei der Schaltteil anhand der Gangpositionsinformationen eine Gangposition bestimmt und dann Spannungen an Magnetventile für unterschiedliche Gangpositionen ausgibt, wodurch die unterschiedliche Gangposition angesteuert wird.

12. Verfahren nach Anspruch 11, wobei der Gangschaltmechanismus der Gangschaltmechanismus nach Anspruch 2 oder 3 oder 5 oder 6 oder 7 oder 8 oder 9 ist und wobei das Verfahren des Weiteren Folgendes umfasst:
Erhalten des zweiten Signals des Gangschaltmechanismus in Echtzeit;
Erzeugen von dem ersten Signal und dem zweiten Signal entsprechenden Ganganzeigeinformationen;
Lesen von den Ganganzeigeinformationen entsprechenden Gangpositionsinformationen in einer vorgespeicherten Gangpositionsliste; und
Schalten in verschiedene Positionen der Gleitbahn des Gangschaltmechanismus anhand der Gangpositionsinformationen, wobei der Schaltteil anhand der Gangpositionsinformationen eine Gangposition bestimmt und dann Spannungen an Magnetventile für unterschiedliche Gangpositionen ausgibt, wodurch die unterschiedliche Gangposition angesteuert wird.

13. Verfahren nach Anspruch 11, des Weiteren umfassend einen Schritt zum Erhalten des ersten Signals, wenn sich das Gleitende des Griffs (20) des Gangschaltmechanismus an jeder Gangposition befindet, um die Gangpositionsliste zu erstellen, vor dem Schritt zum Lesen von den Ganganzeigeinformationen entsprechenden Gangpositionsinformationen in einer vorgespeicherten Gangpositionsliste.

14. Verfahren nach Anspruch 12, des Weiteren umfassend einen Schritt zum Erhalten des ersten Signals und des zweiten Signals, wenn sich das Gleitende des Griffs (20) des Gangschaltmechanismus an jeder Gangposition befindet, um die Gangpositionsliste zu erstellen, vor dem Schritt zum Lesen von den Ganganzeigeinformationen entsprechenden Gangpositionsinformationen in einer vorgespeicherten Gangpositionsliste.

## Revendications

1. Mécanisme de commande de changement de vitesse, comprenant :
une plaque de fond (10) disposée fixement et comprenant une glissière ayant une pluralité de positions de vitesse différentes ;
un pommeau (20) ayant une extrémité d'opération et une extrémité de glissage, l'extrémité de glissage étant disposée de manière glissante dans la glissière et le pommeau (20) comprenant en outre une partie de montage (24) ;
une première partie de transmission reliée à la partie de montage (24) ;
une première partie de plaque de pôle (50) reliée à la première partie de transmission et y générant un premier champ magnétique ; et
un premier capteur (60) disposé fixement, s'étendant dans la première partie de plaque de pôle (50) et sortant un premier signal ;
**caractérisé en ce que** la première partie de transmission comprend un premier arbre (30), qui est relié à la partie de montage (24) de manière pivotante au moyens d'un pivot (200) et comprend une première extrémité et une deuxième extrémité, la deuxième extrémité du premier arbre (30) étant reliée à la première partie de plaque de pôle (50) ;
**en ce que** quand l'extrémité de glissage glisse le long de la glissière, la partie de montage (24) est configurée de telle manière qu'elle entraîne le premier arbre (30) à tourner autour d'un axe du premier arbre (30) et la première partie de plaque de pôle (50) tourne ensemble avec la première partie de transmission ;
**en ce que** le mécanisme de commande de changement de vitesse comprend en outre une première partie de support (40) disposée fixement et la première extrémité de l'arbre (30) est disposée de manière rotative sur la première partie de support (40).

2. Mécanisme de commande de changement de vitesse selon la revendication 1, dans lequel la glissière comprend une première glissière (11) et une deuxième glissière (12) disposées en croix, obtenant ainsi une pluralité de positions de vitesse, dans lequel le mécanisme de commande de changement de vitesse comprenant en outre :
une deuxième partie de transmission reliée à la partie de montage (24) ;
une deuxième partie de plaque de pôle (80) reliée à la deuxième partie de transmission et y générant un deuxième champ magnétique ; et
un deuxième capteur (90) disposé fixement, s'étendant dans la deuxième partie de plaque de pôle (80) et sortant un deuxième signal ;
dans lequel quand l'extrémité de glissage glisse le long de la première glissière (11), la partie de montage (24) est configurée de telle manière qu'elle entraîne le premier arbre (30) à tourner autour de l'axe du premier arbre (30), le premier arbre (30) entraîne la première partie de plaque de pôle (50) à tourner et la deuxième partie de plaque de pôle (80) reste dans sa position, dans lequel quand l'extrémité de glissage glisse le long de la deuxième glissière (12), la deuxième partie de transmission est configurée de telle manière qu'elle entraîne la deuxième partie de plaque de pôle (80) à tourner autour d'un axe du pivot (200) et la première partie de plaque de pôle (50) reste dans sa position.

3. Mécanisme de commande de changement de vitesse selon la revendication 2, dans lequel la deuxième partie de transmission comprend un deuxième arbre (70) relié fixement à la partie de montage (24) et le deuxième arbre (70) entraîne la deuxième partie de plaque de pôle (80) à tourner autour de l'axe du pivot (200).

4. Mécanisme de commande de changement de vitesse selon la revendication 1, dans lequel la première partie de plaque de pôle (50) comprend une première plaque de pôle (51) supérieure et une première plaque de pôle (52) inférieure, qui sont en vis-à-vis, ainsi qu'une première plaque de connexion (53) de plaques de pôle reliant la première plaque de pôle (51) supérieure avec la première plaque de pôle (52) inférieure et dans lequel le premier arbre (30) est disposé sur la plaque de connexion (53) de plaques de pôle.

5. Mécanisme de commande de changement de vitesse selon la revendication 3, dans lequel la deuxième partie de plaque de pôle (80) comprend un corps de plaque de pôle (81) et une partie de connexion (82) disposée sur le corps de plaque de pôle (81) et dans lequel le deuxième arbre (70) entraîne le corps de plaque de pôle (81) à tourner autour de l'axe du pivot (200) au moyen de la partie de connexion (82).

6. Mécanisme de commande de changement de vitesse selon la revendication 5, dans lequel le corps de plaque de pôle (81) comprend une deuxième plaque de pôle (811) supérieure et une deuxième plaque de pôle (812) inférieure, qui sont en vis-à-vis, ainsi qu'une deuxième plaque de connexion (813) de plaques de pôle reliant la deuxième plaque de pôle (811) supérieure avec la deuxième plaque de pôle (812) inférieure, et dans lequel la partie de connexion (82) est disposé sur la deuxième plaque de connexion (813) de plaques de pôle.

7. Mécanisme de commande de changement de vitesse selon la revendication 5, dans lequel la partie de connexion (82) comprend une première plaque de connexion (821) et une deuxième plaque de connexion (822), qui sont en vis-à-vis, dans lequel le deuxième arbre (70) est un arbre aplati disposé entre la première plaque de connexion (821) et la deuxième plaque de connexion (822) et dans lequel l'arbre aplati comprend deux plans interagissant qui interagissent avec la première plaque de connexion (821) et la deuxième plaque de connexion (822).

8. Mécanisme de commande de changement de vitesse selon la revendication 5, dans lequel le mécanisme de commande de changement de vitesse comprend en outre une deuxième partie de support (100), dans lequel la deuxième partie de support (100) est disposée fixement et dans lequel la partie de connexion (82) est disposée de manière pivotant dans la deuxième partie de support (100) ;
dans lequel la deuxième partie de support (100) comprend de préférence une bague de support, et dans lequel la partie de connexion (82) est pourvue d'une partie d'interaction d'arc pour l'interaction avec la bague de support.

9. Mécanisme de commande de changement de vitesse selon la revendication 2, dans lequel le pommeau (20) comprend un levier de pommeau (21) et une partie de bille (22) reliée au levier de pommeau (21), et dans lequel la partie de bille (22) est disposée de manière glissante dans la glissière ;
dans lequel le pommeau (20) comprend en outre de préférence un membre (23) élastique, et dans lequel le membre (23) élastique est disposé dans le levier de pommeau (21) et est en appui contre la partie de bille (22).

10. Véhicule, comprenant :
un châssis ;
une partie de commande disposé sur le châssis ; et
un mécanisme de commande de changement de vitesse disposé sur le châssis, la partie de changement de vitesse étant couplée de manière électrique à un premier capteur (60) du mécanisme de commande de changement de vitesse, dans lequel le mécanisme de commande de changement de vitesse est le mécanisme de commande de changement de vitesse selon l'une quelconque des revendications 1 à 9.

11. Procédé de commande de vitesse utilisant le mécanisme de commande de changement de vitesse selon l'une quelconque des revendications 1 à 9 et une partie de commande, le procédé de commande de vitesse comprenant les étapes suivantes :
obtenir le premier signal du mécanisme de commande de changement de vitesse en temps réel ;
générer des informations d'indication de vitesse correspondant au premier signal ;
lire des informations de position de vitesse correspondant aux informations d'indication de vitesse dans une liste de positions de vitesses pré-stockée ; et
passer à des positions différentes de la glissière du mécanisme de commande de changement de vitesses en se fondant sur les informations de position de vitesse, dans lequel la partie de commande détermine une position de vitesse en se fondant sur les informations de position de vitesse et puis sort des tensions à des électrovannes pour des positions de vitesse différentes, entraînant ainsi la position de vitesse différente.

12. Procédé selon la revendication 11, dans lequel le mécanisme de commande de changement de vitesse est le mécanisme de commande de changement de vitesse selon la revendication 2 ou 3 ou 5 ou 6 ou 7 ou 8 ou 9, et dans lequel le procédé comprend en outre les étapes suivantes :
obtenir le deuxième signal du mécanisme de commande de changement de vitesse en temps réel ;
générer des informations d'indication de vitesse correspondant au premier signal et au deuxième signal ;
lire des informations de position de vitesse correspondant aux informations d'indication de vitesse dans une liste de positions de vitesses pré-stockée ; et
passer à des positions différentes de la glissière du mécanisme de commande de changement de vitesse en se fondant sur les informations de position de vitesse, dans lequel la partie de commande détermine une position de vitesse en se fondant sur les informations de position de vitesse et puis sort des tensions à des électrovannes pour des positions de vitesse différentes, entraînant ainsi la position de vitesse différente.

13. Procédé selon la revendication 11, le procédé comprenant en outre une étape consistant à obtenir le premier signal quand l'extrémité de glissage du pommeau (20) du mécanisme de commande de changement de vitesse est positionnée dans chaque position de vitesse pour dresser la liste de positions de vitesses avant l'étape consistant à lire des informations de position de vitesse correspondant aux informations d'indication de vitesse dans une liste de positions de vitesses pré-stockée.

14. Procédé selon la revendication 12, le procédé comprenant en outre une étape consistant à obtenir le premier signal et le deuxième signal quand l'extrémité de glissage du pommeau (20) du mécanisme de commande de changement de vitesse est positionnée dans chaque position de vitesse pour dresser la liste de positions de vitesses avant l'étape consistant à lire des informations de position de vitesse correspondant aux informations d'indication de vitesse dans une liste de positions de vitesses pré-stockée.
